# EUROPÄISCHE PATENTSCHRIFT

(11) **EP 2 503 360 B1**
(45) Veröffentlichungstag und Bekanntmachung des Hinweises auf die Patenterteilung: **19.08.2020**
(21) Anmeldenummer: 11002497.3
(22) Anmeldetag: 25.03.2011
(51) Int. Cl.: G01V 8/14, G01S 17/04

(54) **Verfahren zur optischen Erfassung zumindest teilweise transparenter Objekte**
Method for optically detecting at least partially transparent objects
Procédé de détection optique d'objets au moins partiellement transparents

(43) Veröffentlichungstag der Anmeldung: 26.09.2012
(73) Patentinhaber: Baumer Electric AG, 8501 Frauenfeld (CH)
(72) Erfinder: Preuss, Volker, 78464 Konstanz (DE); Müller, Klaus Friedrich, 69120 Heidelberg (DE); Hochgenug, Walter, 64401 Gross-Bieberau (DE)
(74) Vertreter: Strauss, Steffen

(56) Entgegenhaltungen:
- JP-A- 5 209 723
- JP-A- 2000 186 910
- CURLESS B ET AL: "Better optical triangulation through spacetime analysis", COMPUTER VISION, 1995. PROCEEDINGS., FIFTH INTERNATIONAL CONFERENCE ON CAMBRIDGE, MA, USA, 20. Juni 1995 (1995-06-20), - 23. Juni 1995 (1995-06-23), Seiten 987-994, XP010147003, LOS ALAMITOS, CA, IEEE COMPUT. SOC, US DOI: 10.1109/ICCV.1995.466772 ISBN: 978-0-8186-7042-8
- Sensorland: "How they work: Laser Triangulation Sensors", How sensors work - Digital CANBUS , 24. Mai 2007 (2007-05-24), XP002660679, Gefunden im Internet: URL:http://www.sensorland.com/HowPage056.h tml [gefunden am 2011-10-05]

## Beschreibung

### Gebiet der Erfindung

Die Erfindung betrifft ein Verfahren zur optischen Bestimmung des Vorhanden- oder Nichtvorhandenseins eines transparenten Objektes mittels Durchgang von Licht.

### Hintergrund der Erfindung

Es ist bekannt, das Vorhandensein transparenter Objekte wie beispielsweise Glas- oder Kunststoffflaschen, welche auf einem Förderband transportiert werden, mittels optischer Sensoren zu erfassen.

So ist es beispielsweise aus der Praxis bekannt, die Transmission eines transparenten Objektes als Maß für das Vorhanden- oder Nichtvorhandensein zu verwenden.

Dabei wird mittels einer Lichtquelle ein Reflektor hinter dem Bereich, in welchem sich das transparente Objekt befinden kann, angestrahlt und die zurückkommende Beleuchtungsstärke gemessen. Auch bei Objekten mit hoher Transmission im jeweiligen Wellenlängenbereich, beispielsweise Klarglas, wird an den Grenzflächen ein Teil des Lichtes in verschiedene Richtungen reflektiert und fällt somit nicht auf den Sensor.

Unter der Annahme, dass beispielsweise an jeder Grenzfläche 4 % der Lichtleistung verloren gehen, gehen in diesem Beispiel bei Hin- und Rückweg 16 % verloren. Dieser Unterschied zum freien Strahl, in welchem sich kein transparentes Objekt im Strahlengang befindet, ist messbar und kann zur Generierung eines Schaltsignals verwendet werden, sobald sich ein transparentes Objekt im Strahlengang befindet.

Nachteilig an diesem Messverfahren ist, dass ein Reflektor hinter dem zu erfassenden Objekt angebracht werden muss, damit die Signalhöhe für die Auswertung geringer Differenzen und eine Unterscheidung von unerwünschten Reflexionen am zu erfassenden Objekt möglich ist. Weiter wird das genannte Verfahren oft im Bereich der Abfüllung und Herstellung von Nahrungsmitteln und Reinigungsmitteln verwendet. Dabei können die Messkomponenten Dampf und aggressiven Reinigungsmitteln ausgesetzt sein. Insbesondere sind die Reflektoren anfällig und müssen entweder in ein Gehäuse eingesetzt oder regelmäßig ausgetauscht werden.

Ferner erfüllen heutige Reflektoren insbesondere Tripelreflektoren keine Hygieneanforderungen, die in dieser Branche zunehmend gefordert werden.

Zudem kann es zu systembedingten Fehlmessungen kommen. Im Falle des Vorhandenseins eines reflektierenden Objektes im Strahlengang kann dies dazu führen, dass beispielsweise die Abschwächung der Lichtstärke durch das zu erfassende transparente Objekt dadurch kompensiert wird, dass durch ein weiteres reflektierendes Objekt oder sogar unter Umständen durch Reflexe an dem zu erfassenden Objekt selbst, Licht, welches nicht vom Reflektor reflektiert wird, auf den Sensor fällt. In so einem Falle wird kein Schaltsignal generiert, obwohl sich ein transparentes Objekt im Erfassungsbereich befindet.

Aus der Druckschrift JP 052 097 23 ist eine optische Vorrichtung zur Messung der Dicke einer dünnen transparenten Scheibe bekannt. Es wird beschrieben, wie sich durch Einführen der transparenten Scheibe in den Messstrahlengang auf Grund deren Brechungsindex eine gemessene Distanz eines Laserlichtstrahles ändert.

### Aufgabe der Erfindung

Der Erfindung liegt demgegenüber die Aufgabe zu Grunde, ein Verfahren zur optischen Erfassung transparenter Objekte bereit zu stellen, bei welchem die Nachteile des Standes der Technik zumindest reduziert sind.

Eine weitere Aufgabe der Erfindung ist es, die Zuverlässigkeit der Erfassung transparenter Objekte zu erhöhen.

### Zusammenfassung der Erfindung

Die Aufgabe der Erfindung wird durch ein Verfahren zur optischen Erfassung zumindest teilweise transparenter Objekte nach Anspruch 1 gelöst.

Bevorzugte Ausführungsformen und Weiterbildungen der Erfindung sind den jeweiligen Unteransprüchen zu entnehmen. Insbesondere bezieht sich die Erfindung auf die Erfassung von in einer Produktionsanlage vorbeilaufenden transparenten Objekten, wie Flaschen, Gläser, Verpackungen etc. Unter "zumindest teilweise transparent" werden Objekte verstanden, die zumindest teildurchlässig für das verwendete Licht sind. Somit ist auch denkbar, die Erfindung für Objekte zu verwenden, welche eingefärbt sind, aber noch eine hinreichende Transmission haben.

Der Lichtstrahl einer Lichtquelle wird über eine Referenzfläche auf einen ortsauflösenden Sensor reflektiert und / oder remittiert, wobei sich das zu erfassende, zumindest teilweise transparente Objekt zumindest zeitweise im Lichtstrahl vor der Referenzfläche befindet. Die Referenzfläche ist dabei als eine reflektierende und/oder remittierende Fläche ausgebildet. Die Referenzfläche kann insbesondere als eine Metallplatte eines Einrichtungs- oder Mobiliargegenstandes ausgeführt sein.

Es wird mithin ein Lichtstrahl ausgesandt, der durch die zu erfassenden transparenten Objekte strahlt. Das Licht der Referenzfläche, die sich hinter dem zu erfassenden Objekt befindet, wird auf einen ortsauflösenden Sensor zurück geworfen und dabei insbesondere mittels einer Optik, beispielsweise einer Linse, auf den Sensor abgebildet. Bei der Referenzfläche muss es sich aber nicht um einen für diesen Zweck angebrachten Reflektor handeln, sondern es kann nahezu eine beliebige reflektierende und/oder remittierende Fläche verwendet werden, wie im Folgenden noch näher erläutert wird.

Über den ortsauflösenden Sensor werden die Beleuchtungsstärke und die örtliche Verteilung des Lichtes gemessen. Dies erfolgt beispielsweise durch die Auswertung der Pixel eines Sensors.

Weiter wird über das Prinzip der Triangulation der Abstand des Reflektionsortes mittels des auf den Sensor fallenden Lichtes anhand der örtlichen Verteilung der Beleuchtungsstärke bestimmt.

Nach dem bekannten Prinzip der Triangulation kann anhand der Intensitätsverteilung des Lichtes die Entfernung des Objektes bestimmt werden. So können möglicherweise vorhandene Anteile von Licht, welche von anderen Objekten reflektiert werden, heraus gerechnet werden. Das Messverfahren ist somit weniger störanfällig, da in den Messbereich tretende reflektierende Objekte, wie unter Umständen auch Staub, Scherben etc., aufgrund des anderen Abstandes des einfallenden Lichtes ausgeschlossen werden können.

Das Vorhanden- oder Nichtvorhandensein des zumindest teilweise transparenten Objektes wird nunmehr anhand der Beleuchtungsstärke einzelner Pixel und der örtlichen Verteilung der Beleuchtungsstärke und des Abstands des Ortes des reflektierenden und/oder remittierenden Lichtes des Lichtstrahles, welches auf den Sensor trifft, bestimmt werden.

Vorzugsweise muss die Beleuchtungsstärke, deren örtliche Verteilung und der Abstand des Ortes des reflektierenden und/oder remittierenden Lichtes des Lichtstrahles, welches auf den Sensor trifft, jeweils in einem vorgegebenen Fenster liegen, um auf das Vorhanden- oder Nichtvorhandensein eines transparenten Objektes zu schließen. Da diese Parameter in die Messung eingehen und die Bestimmung des Vorhandenseins eines transparenten Objektes nicht allein anhand des Intensitätsverlustes des das Objekt durchlaufenden Lichtes bestimmt wird, kann auf die Verwendung eines speziellen Reflektors, welcher nur geringe Lichtverluste durch Streulicht nach sich zieht, verzichtet werden.

Vielmehr können, wie es bei einer bevorzugten Ausführungsform der Erfindung vorgesehen ist, bereits vorhandene reflektierende Flächen, wie beispielsweise die Metallplatten eines Einrichtungs- oder Mobiliargegenstandes, insbesondere Edelstahlflächen im Küchen- und Anlagenbereich, als Referenzfläche verwendet werden. Dies ist insbesondere dadurch möglich, dass gemäß der Erfindung der Abstand der Referenzfläche zum Sensor bestimmt wird. Die Referenzfläche ist dabei die Fläche welche das Licht reflektiert und/oder remittiert.

Bei einer Weiterbildung der Erfindung umfasst das Verfahren einen Messzyklus, innerhalb dessen eine Lichtquelle zur Erzeugung des Lichtstrahls angeschaltet wird sowie ein Kalibrierzyklus, in welchem die Lichtquelle ausgeschaltet wird. Während des Kalibrierzyklus kann nicht von der Lichtquelle erzeugtes Licht erfasst und dieses von einem auszuwertenden Ausgangssignal abgezogen werden. Der Einfluss von Fremdlicht kann so reduziert werden. Aufgrund wechselnder Lichtverhältnisse des Fremdlichtes kann dennoch der Pegel des Nutzsignals laufend verschoben werden. Eine Weiterbildung der Erfindung sieht daher vor, dass zur Bestimmung des Vorhanden- oder Nichtvorhandenseins als ein Referenzpegel der Pegel eines hellsten Pixels des Sensors verwendet wird und zur Auswertung die Signalabstände benachbarter Pixel verwendet werden. Gegenüber der unabhängigen Auswertung der einzelnen Pixel des Sensors können so die Einflüsse von Streulicht und Fremdlicht weiter reduziert werden.

Als Sensor wird vorzugsweise ein optischer Sensor mit einem zumindest eindimensionalen Detektorarray verwendet. Insbesondere kann ein Zeilensensor verwendet werden. Hierfür geeignet sind insbesondere CMOS-Sensoren, welche zusammen mit der Auswerteelektronik auf einer Platine aufgebracht werden.

Insbesondere werden Sensoren mit einer Zeilenlänge von 32 bis 1024 Pixel verwendet.

Ein Zeilensensor, mit Hilfe dessen der Abstand des Reflektionsortes in Bezug auf eine Ebene bestimmt werden kann, genügt für die meisten Anforderungen. Es ist aber auch denkbar, als Sensor einen Flächensensor zu verwenden, mittels dessen der Abstand von reflektierenden Objekten dreidimensional im Raum erfasst werden kann.

Der Sensor wird vorzugsweise mit der Lichtquelle in einem gemeinsamen Gehäuse angeordnet. Insbesondere wird ein hermetisch verschlossenes Gehäuse verwendet, in welchem Sensor und Lichtquelle auch vergossen sein können.

Als Lichtquelle kann beispielsweise ein Laser oder eine LED verwendet werden. Insbesondere LEDs lassen sich als kompakte Baueinheit in einem Gehäuse gut unterbringen. Insbesondere, wenn über weitere Distanzen gemessen werden soll, können auch Laser mit hoher Lichtleistung verwendet werden.

Das Messverfahren eignet sich im Prinzip für beliebige Wellenlängen.

Durch Festlegung eines Mindestabstandes und/oder eines Maximalabstandes einer reflektierenden Fläche kann ein Erfassungsbereich definiert werden. Unter einem Erfassungsbereich wird in diesem Falle der Bereich verstanden, der in einem Abstandsfenster liegt, aus welchem das reflektierte und auf den Sensor abgebildete Licht stammt.

Beim Durchgang eines zumindest teilweise transparenten Objektes kann mittels des erfindungsgemäßen Verfahrens ein Schaltsignal erzeugt werden. Bei einer Weiterbildung ist auch denkbar, neben reinen Schaltsignalen auch Fehlersignale zu generieren, falls beispielsweise eine hohe Beleuchtungsstärke aufgrund eines reflektierenden Objektes im falschen Abstand vorhanden ist. Dies kann beispielsweise der Fall sein, wenn ein reflektierendes Objekt, wie ein Metallbehälter, versehentlich in den Strahlengang gestellt wird.
Die Erfindung betrifft des weiteren die Verwendung einer Lichtquelle und eines optischen Sensors mit einem zumindest eindimensionalen Detektorarray zur Erfassung zumindest teilweise transparenter Objekte. Anhand der Stärke und örtlichen Verteilung des von der Lichtquelle ausgestrahlten und von einer reflektierenden Fläche und auf den Sensor zurückfallenden Lichtes wird das Vorhanden- oder Nichtvorhandensein eines Objektes bestimmt.

Insbesondere geht dabei über die Verteilung der Lichtstärke der anhand der Verteilung bestimmte Abstand eines von der Lichtquelle angestrahlten Objektes, welches Licht auf den Sensor reflektiert, ein.

So kann, wie bereits oben dargestellt, darauf geschlossen werden, ob das Licht von hinter dem zu erfassenden Objekt angeordnetem Reflektionsort stammt oder ob das Licht von anderen Objekten reflektiert wird.

Die Erfindung wird nachfolgend anhand von Ausführungsbeispielen und unter Bezugnahme auf die Zeichnungen näher erläutert. Dabei verweisen gleiche Bezugszeichen auf gleiche oder entsprechende Elemente. Die Merkmale verschiedener Ausführungsbeispiele können miteinander kombiniert werden.

Es zeigen:
- Fig. 1: eine schematische Darstellung des Grundprinzips der Erfindung,
- Fig. 2: eine schematische Darstellung der Erfindung mit einem in einem Lichtstrahl befindlichen Störobjekt und
- Fig. 3: eine schematische Darstellung eines Zeilensignales einer Empfängerzeile.

### Beschreibung der Zeichnungen

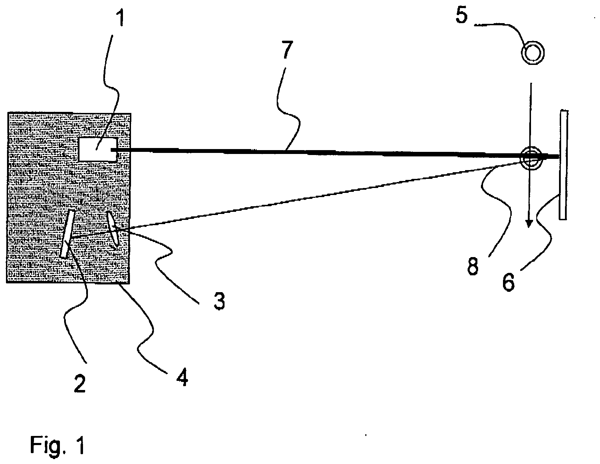

Fig.1 zeigt, schematisch dargestellt, das Grundprinzip der Erfindung.

Über eine Lichtquelle 1, beispielsweise eine LED-Lichtquelle, wird ein Lichtstrahl 7 auf eine Referenzfläche 6 gerichtet. Der Lichtstrahl 7 erzeugt auf der Referenzfläche 6, bei der es sich beispielsweise um eine ohnehin vorhandene Edelstahlfläche handeln kann, einen Lichtpunkt, der über eine Linse 3 auf einen Sensor 2 abgebildet wird. In diesem Ausführungsbeispiel handelt es sich bei dem Sensor 2 um einen CMOS-Zeilensensor.

Lichtquelle 1, Sensor 2 und Linse 3 sind vorzugsweise in einem hermetisch verschlossenen Gehäuse 4 angeordnet.

Vor der Referenzfläche 6 laufen beispielsweise in einer Produktionsanlage transparente Objekte 5, wie Flaschen oder Gläser, vorbei. Die transparenten Objekte 5 schwächen durch Streuung an den Grenzflächen sowie gegebenenfalls durch Absorption das auf die Referenzfläche 6 fallende und zurück reflektierte Licht ab, so dass anhand der Beleuchtungsstärke auf dem Sensor 2 auf das Vorhanden- oder Nichtvorhandensein des transparenten Objektes 5 geschlossen werden kann.

Eine Lichtachse 8 zwischen der Referenzfläche 6 und dem Sensor 2 zeigt die Richtung, aus welcher das Licht von der Referenzfläche 6 kommt.

Licht, von anderen reflektieren Objekten 9, kommt, wie im Folgenden noch ausführlicher dargestellt wird, aus einer anderen Richtung, was über die Verwendung 2 eines zumindest eindimensionalen Detektorarray als Sensor 2 erfasst werden kann.

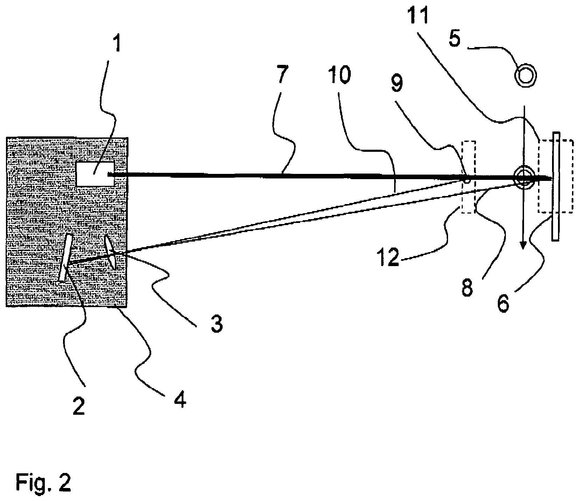

In Fig. 2 ist eine Situation dargestellt, bei welcher sich nunmehr ein nicht zu erfassendes, reflektierendes Objekt 9 im Strahlengang befindet.

Durch das reflektierende Objekt 9 wird nunmehr zusätzliches Licht auf den Sensor 2 zurück reflektiert.

Bei bekannten Messverfahren besteht in dieser Situation die Gefahr, dass dieses zusätzliche Licht den durch das zu erfassende Objekt 5 verursachten Verlust der Lichtstärke auf dem Sensor 2 kompensiert, so dass der in Fig. 2 dargestellten Konstellation kein Schaltsignal generiert würde.

Da aber ein ortsauflösender Sensor 2 verwendet wird, kann über die Verteilung der Beleuchtungsstärke auf dem Sensor 2 bestimmt werden, aus welcher Richtung das Licht kommt. Die Richtung des Lichtes, welches von der Referenzfläche 6 stammt, wird durch eine Lichtachse 8 zwischen Referenzfläche 6 und Sensor 2 wieder gegeben, während das von dem nicht zu erfassenden Objekt 9 reflektierte Licht über eine Lichtachse 10 zwischen dem reflektierendem Objekt 9 und Sensor 2 auf den Sensor 2 projiziert wird.

Diese Anordnung entspricht einer optischen Abstandsmessung gemäß der Triangulation. Über die Festlegung des Abstandsbereiches der Referenzfläche 6 kann nunmehr ein Erfassungsbereich 11 definiert werden. Licht aus dem Erfassungsbereich 11 geht in die Bestimmung ein, wohingegen Licht, welches aus dem Bereich 12 stammt, nicht in die Berechnung eingeht, ob sich ein transparentes Objekt 5 im Strahlengang befindet.

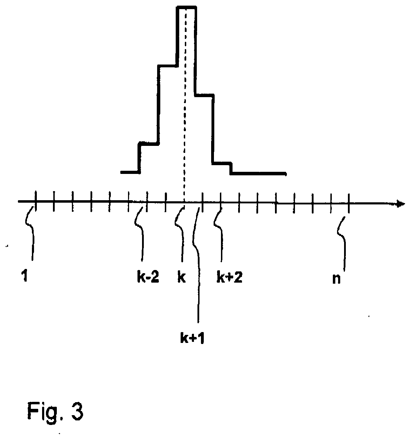

Fig. 3 zeigt ein typisches Zeilensignal einer Empfängerzeile, insbesondere eines CMOS-Sensors. Das Licht der Referenzfläche 6 (in Fig.1 und 2) wird über eine Linse 3 auf den Sensor 2 abgebildet und beleuchtet einige Pixel.

Der Sensor 2 hat hier die Pixel 1 bis n.

Das hellste Pixel, welches hier mit k bezeichnet ist, wird als Referenzpegel verwendet und die Abstände zu den benachbarten Pixel, hier k-2 und k+2, werden zur Untersuchung der Verteilung der Beleuchtungsstärke und deren Änderung verwendet. Ober die Verwendung des hellsten Pixels als Referenz kann der Einfluss von Streulicht und Hintergrundbeleuchtung weiter reduziert werden.

Die Erfindung ermöglicht eine zuverlässige optische Erfassung transparenter Objekte 5, bei welcher auf die nachträgliche Anbringung der Referenzfläche 6 verzichtet werden kann.

### Bezugszeichenliste

- 1.: Lichtquelle
- 2.: Sensor
- 3.: Linse
- 4.: Gehäuse
- 5.: transparentes Objekt
- 6.: Referenzfläche
- 7.: Lichtstrahl
- 8.: Lichtachse zwischen Referenzfläche und Sensor
- 9.: reflektierendes Objekt
- 10.: Lichtachse zwischen reflektierenden Objekt und Sensor
- 11.: Referenz - Erfassungsbereich
- 12.: Bereich

## Patentansprüche

1. Verfahren zur optischen Erfassung zumindest teilweise transparente Objekte, umfassend die Schritte:
- Projizieren eines Lichtstrahles über eine Referenzfläche (6) auf einen ortsauflösenden Sensor (2), wobei sich das zu erfassende zumindest teilweise transparente Objekt (5) zumindest zeitweise im Lichtstrahl (7) vor der Referenzfläche (6) befindet,
- Messen einer Beleuchtungsstärke und deren örtlicher Verteilung auf dem ortsauflösenden Sensor (2),
- Bestimmen eines Abstandes der Referenzfläche (6) und/oder des zumindest teilweisen transparenten Objektes (5) anhand der örtlichen Verteilung der Beleuchtungsstärke und **gekennzeichnet durch**:
- Bestimmen des Vorhanden- oder Nichtvorhandenseins des zumindest teilweise transparenten Objektes (5) anhand der Beleuchtungsstärke einzelner Pixel des ortsauflösenden Sensor (2), und der örtlichen Verteilung der Beleuchtungsstärke und des Abstandes des Ortes des reflektierten und / oder remittierten Lichtes des Lichtstrahles (7), welches auf den Sensor (2) trifft.

2. Verfahren nach dem vorstehenden Anspruch, **dadurch gekennzeichnet, dass** die Referenzfläche (6) eine reflektierende und/oder remittierende Fläche ist, insbesondere eine Metallplatte eines Einrichtungs- oder Mobiliargegenstandes.

3. Verfahren nach einem der vorstehenden Ansprüche, **dadurch gekennzeichnet, dass** der Abstand der Referenzfläche (6) vom Sensor (2) und / oder die Beleuchtungsstärke und deren örtlicher Verteilung auf dem Sensor (2) speicherbar sind.

4. Verfahren nach einem der vorstehenden Ansprüche, **dadurch gekennzeichnet, dass** in einem Messzyklus eine Lichtquelle (1) zur Erzeugung des Lichtstrahls (7) angeschaltet wird, wobei die Beleuchtungsstärke und deren örtliche Verteilung auf dem Sensor (2) als ein erster Messwert gemessen wird und in einem Kalibierzyklus die Lichtquelle (1) ausgeschaltet wird, wobei die Beleuchtungsstärke und deren örtlicher Verteilung auf dem Sensor (2) als ein zweiter Messwert gemessen wird, wobei der zweite Messwert von dem ersten Messwert subtrahiert wird.

5. Verfahren nach einem der vorstehenden Ansprüche, **dadurch gekennzeichnet, dass** zur Bestimmung des Vorhanden- oder Nichtvorhandenseins des Objektes als ein Referenzpegel der Pegel eines hellsten Pixels des Sensors (2)verwendet wird und zur Auswertung die Signalabstände benachbarter Pixel verwendet werden.

6. Verfahren nach einem der vorstehenden Ansprüche, **dadurch gekennzeichnet, dass** der Sensor (2) mit einem zumindest eindimensionalen Detektorarray ausgeführt ist, welcher vorzugsweise als ein CMOS-Sensor ausgeführt ist.

7. Verfahren nach einem der vorstehenden Ansprüche, **dadurch gekennzeichnet, dass** der Sensor (2) zusammen mit der Lichtquelle (1)in einem gemeinsamen Gehäuse (4) angeordnet ist, vorzugsweise in einem hermetisch verschlossenen Gehäuse (4).

8. Verfahren nach einem der vorstehenden Ansprüche, **dadurch gekennzeichnet, dass** die Lichtquelle (1) als Laser oder LED ausgeführt ist.

9. Verfahren nach einem der vorstehenden Ansprüche, **dadurch gekennzeichnet, dass** als Objekte transparente Behälter zur Aufnahme von Getränken, Speisen oder Reinigungsmitteln erfasst werden.

10. Verfahren nach einem der vorstehenden Ansprüche, **dadurch gekennzeichnet, dass** durch Festlegung eines Mindestabstandes und/oder eines Maximalabstandes der Referenzfläche (6) ein Referenz-Erfassungsbereich (11) definiert wird.

11. Verfahren nach einem der vorstehenden Ansprüche, **dadurch gekennzeichnet, dass** beim Durchgang des zumindest teilweise transparenten Objektes (5) ein Schaltsignal generiert wird.

12. Verfahren nach einem der vorstehenden Ansprüche, **dadurch gekennzeichnet, dass** Grenzwerte von Beleuchtungsstärke der einzelnen Pixel und/oder der örtlichen Verteilung der Beleuchtungsstärke und/oder des Abstands der Referenzfläche (6) langsam auf Veränderungen nachgeführt werden.

## Claims

1. Procedure for the optical detection of at least partially transparent objects, comprising the steps:
- Projection of a light beam via a reference surface (6) onto a position-resolving sensor (2), the at least partially transparent object (5) to be detected being located at least temporarily in the light beam (7) in front of the reference surface (6),
- Measurement of illuminance and its local distribution on the position-resolving sensor (2),
- Determination of the distance of the reference surface (6) and/or of the at least partially transparent object (5) on the basis of the local distribution of the illuminance and **characterized by**:
- Determination of the presence or absence of the at least partially transparent object (5) on the basis of the illuminance of individual pixels of the position-resolving sensor (2), and of the local distribution of the illuminance and the distance of the location of the reflected and/or remitted light of the light beam (7) striking the sensor (2).

2. Procedure in accordance with the above Claim, **characterized in that** the reference surface (6) is a reflecting and/or remitting surface, in particular a metal plate on a furnishing item or piece of furniture.

3. Procedure in accordance with any one of the above Claims, **characterized in that** the distance of the reference surface (6) from the sensor (2) and/or the illuminance and its local distribution on the sensor (2) can be saved.

4. Procedure in accordance with any one of the above Claims, **characterized in that** a light source (1) for generating the light beam (7) is switched on in a measuring cycle, the illuminance and its local distribution on the sensor (2) being measured as a first measured value, and the light source (1) being switched off in a calibration cycle, the illuminance and its local distribution on the sensor (2) being measured as a second measured value, the second measured value being subtracted from the first measured value.

5. Procedure in accordance with any one of the above Claims, **characterized in that** for determining the presence or absence of the object as a reference level, the level of the brightest pixel of the sensor (2) is used, and that for evaluation purposes the signal distances of adjacent pixels are used.

6. Procedure in accordance with any one of the above Claims, **characterized in that** the sensor (2) is designed with an at least one-dimensional detector array, which is preferably designed as a CMOS sensor.

7. Procedure in accordance with any one of the above Claims, **characterized in that** the sensor (2) is located together with the light source (1) in a common housing (4), preferably in a hermetically sealed housing (4).

8. Procedure in accordance with any one of the above Claims, **characterized in that** the light source (1) is a laser or an LED.

9. Procedure in accordance with any one of the above Claims, **characterized in that** transparent containers for holding beverages, food or cleaning agents are detected as objects.

10. Procedure in accordance with any one of the above Claims, **characterized in that** a reference detection area (11) is defined by determining a minimum distance and/or a maximum distance of the reference surface (6).

11. Procedure in accordance with any one of the above Claims, **characterized in that** a switching signal is generated when the at least partially transparent object (5) passes through.

12. Procedure in accordance with any one of the above Claims, **characterized in that** limit values of illuminance of the individual pixels and/or of the local distribution of the illuminance and/or the distance of the reference surface (6) are slowly tracked for changes.

## Revendications

1. Procédé de détection optique d'objets au moins partiellement transparents, comprenant les étapes consistant à :
- projeter un faisceau lumineux via une surface de référence (6) sur un capteur à résolution locale (2), l'objet au moins partiellement transparent à détecter (5) se trouvant au moins temporairement dans le faisceau lumineux (7) devant la surface de référence (6),
- mesurer un éclairement et sa diffusion locale sur le capteur à résolution locale (2),
- déterminer une distance de la surface de référence (6) et/ou de l'objet au moins partiellement transparent (5) à l'aide de la diffusion locale de l'éclairement et **caractérisé par** le fait de :
- déterminer la présence ou l'absence de l'objet au moins partiellement transparent (5) au moyen de l'éclairement de quelques pixels du capteur à résolution locale (2), et de la diffusion locale de l'éclairement et de la distance de l'emplacement de la lumière réfléchie et/ou réémise du faisceau lumineux (7), qui rencontre le capteur (2).

2. Procédé selon la revendication précédente, **caractérisé en ce que** la surface de référence (6) est une surface réfléchissante et/ou réémettante, en particulier une plaque métallique d'un objet d'aménagement ou de mobilier.

3. Procédé selon l'une des revendications précédentes, **caractérisé en ce que** la distance de la surface de référence (6) du capteur (2) et/ou l'éclairement et sa diffusion locale sur le capteur (2) peuvent être enregistrés.

4. Procédé selon l'une des revendications précédentes, **caractérisé en ce que**, dans un cycle de mesure, une source lumineuse (1) est allumée pour générer un faisceau lumineux (7), l'éclairement et sa diffusion locale sur le capteur (2) étant mesurés en tant que première valeur mesurée et **en ce que**, dans un cycle d'étalonnage, la source lumineuse (1) est éteinte, l'éclairement et sa diffusion locale sur le capteur (2) étant mesurés en tant que seconde valeur mesurée, la seconde valeur mesurée étant soustraite de la première valeur mesurée.

5. Procédé selon l'une des revendications précédentes, **caractérisé en ce que**, pour déterminer la présence ou l'absence de l'objet en tant que niveau de référence, on utilise le niveau du pixel le plus clair du capteur (2) et pour évaluer les distances entre les signaux, on utilise des pixels voisins.

6. Procédé selon l'une des revendications précédentes, **caractérisé en ce que** le capteur (2) est exécuté avec au moins un ensemble de détecteurs unidimensionnel, qui est exécuté de préférence en tant que capteur CMOS.

7. Procédé selon l'une des revendications précédentes, **caractérisé en ce que** le capteur (2) est disposé avec la source lumineuse (1) dans un boîtier commun (4), de préférence dans un boîtier hermétiquement fermé (4).

8. Procédé selon l'une des revendications précédentes, **caractérisé en ce que** la source lumineuse (1) est exécutée en tant que laser ou DEL.

9. Procédé selon l'une des revendications précédentes, **caractérisé en ce que** des contenants transparents destinés à recevoir des boissons, de la nourriture ou des produits nettoyants sont détectés en tant qu'objets.

10. Procédé selon l'une des revendications précédentes, **caractérisé en ce qu'**une zone de détection de référence (11) est définie en fixant une distance minimale et/ou une distance maximale de la surface de référence (6).

11. Procédé selon l'une des revendications précédentes, **caractérisé en ce que**, lors du passage de l'objet au moins partiellement transparent (5), un signal de commutation est généré.

12. Procédé selon l'une des revendications précédentes, **caractérisé en ce que** des valeurs limites d'éclairement des quelques pixels et/ou de la diffusion locale de l'éclairement et/ou de la distance de la surface de référence (6) sont lentement modifiées.
